# EUROPÄISCHE PATENTSCHRIFT

(11) **EP 2 385 959 B1**
(45) Veröffentlichungstag und Bekanntmachung des Hinweises auf die Patenterteilung: **15.10.2014**
(21) Anmeldenummer: 10700018.4
(22) Anmeldetag: 05.01.2010
(51) Int. Cl.: C08G 18/40, C08L 101/00, C08G 18/48, C08G 18/63, C08G 101/00, C08G 18/76

(54) **HOCHELASTISCHE POLYURETHANWEICHSCHAUMSTOFFE**
HIGHLY ELASTIC FLEXIBLE POLYURETHANE FOAMS
MOUSSE DE POLYURÉTHANE SOUPLE HAUTEMENT ÉLASTIQUE

(30) Priorität: 12.01.2009 EP 09150398
(43) Veröffentlichungstag der Anmeldung: 16.11.2011
(73) Patentinhaber: BASF SE, 67056 Ludwigshafen (DE)
(72) Erfinder: BRUCHMANN, Bernd, 67251 Freinsheim (DE); SCHÖNFELDER, Daniel, B-1000 Bruxelles (BE); FERBITZ, Jens, 49074 Osnabrück (DE); EISENHARDT, Andrea, 49377 Vechta (DE)
(86) Internationale Anmeldenummer: PCT/EP2010/050023
(87) Internationale Veröffentlichungsnummer: WO 2010/079155

(56) Entgegenhaltungen:
- WO-A1-02/10247
- WO-A1-03/062297
- WO-A1-2008/071622
- US-A1- 2006 122 286

## Beschreibung

Die vorliegende Erfindung betrifft hochelastische Polyurethanweichschaumstoffe, erhältlich durch Vermischen von a) Polyisocyanaten mit b) mindestens einer höhermolekularen Verbindung mit mindestens zwei reaktiven Wasserstoffatomen, c) hyperverzweigten Polyethern, d) gegebenenfalls niedermolekularen Kettenverlängerungsmitteln und/oder Vernetzungsmitteln, e) Katalysatoren, f) Treibmitteln und g) gegebenenfalls sonstigen Zusatzstoffen, ein Verfahren zu deren Herstellung sowie deren Verwendung zur Herstellung von Möbeln, Matratzen, Autositzen und anderen Polsterungen im Automobilbereich.

Polyurethanweichschaumstoffe werden überwiegend zur Herstellung von Möbeln und Matratzen sowie für Autositze und Autoteppiche eingesetzt. Wichtige Eigenschaften für diese Anwendungen sind mechanische und mechanisch-dynamische Kenngrößen, wie Härte, Elastizität, Dehnung, Zugfestigkeit, Verlustmodul und Speichermodul. In Bezug auf die Härte und die Elastizität der Polyurethan-Weichschäume verhält es sich so, dass in der Regel eine Erhöhung der Elastizität zu einer Verringerung der Härte führt.

Für die meisten Anwendungen, wie beispielsweise Polsterungen für Sitze oder Matratzen existieren feste Vorgaben für die Härte. Ein besonderes Komfortmerkmal von Polyurethanweichschaumstoffen ist aber eine möglichst hohe Elastizität.

Ein weiterer wichtiger Parameter für Polyurethanweichschaumstoffe ist deren Dichte. Dabei ist man bestrebt, die Dichte aus Kosten- und Gewichtsgründen zu verringern, um möglichst wenig Material einzusetzen. Allerdings führt eine Verringerung der Dichte bei gleichbleibender Härte zu einer Verringerung der Elastizität.

Ein weiteres Komfortmerkmal für Polyurethanschaumstoffe, insbesondere bei deren Verwendung als Automobilsitze, ist die Vibrationsdämpfung.

Aus WO 03/062297 ist bekannt, dass dendritische Polyether zur Herstellung von Polyurethanschaumstoffen eingesetzt werden können und zu einer verbesserten Schaumstabilität bei geringer Dichte und hoher Stauchhärte führen.

Aus WO 02/10247 ist es bekannt, zur Erhöhung der Härte und der Druckstabilität von Isocyanat-basierten Polymerschäumen bei gleichbleibender Dichte einen dendritischen Polyester als Additiv einzusetzen. Dabei kann es sich bei dem dendritischen Polymer um jede Art von dendritischem Polymer handeln, wobei der Gehalt an aktiven Wasser-stoffatomen größer als 3,8 mmol/g, die OH-Funktionalität größer 8 und das Polymer zu zumindest 15 Gew.-%, bezogen auf das Gewicht des dendritischen Polymers, mit einem Polyetherol mit einer OH-Zahl von weniger als 40 mischbar ist.

Ein Nachteil der bekannten dendritischen und hyperverzweigten Zusätze aus dem Stand der Technik ist, dass diese Zusätze zu überwiegend geschlossenzelligen Polyurethanschaumstoffen führen. Geschlossenzellige Polyurethanschaumstoffe aber weisen eine gegenüber offenzelligen Schäumen verminderte Elastizität auf. Weiter ist die Verarbeitung von geschlossenzelligen Polyurethanweichschaumstoffen schwierig, da sich die in den Zellen enthaltenen Zellgase durch die Abkühlung des Schaums nach der Reaktion zusammenziehen, was zu einem unerwünschten Schrumpfen der Polyurethanschaumstoffe führt. Es ist zwar möglich, durch weitere Zusätze, wie beispielsweise Tenside, die Zellen des entstehenden Polyurethanschaumstoffs offen zu halten, allerdings sind diese Zusätze teuer und führen zu verschlechterten mechanischen Eigenschaften des Schaumstoffs. Weiter können diese Polyurethanschaumstoffe nur mit speziellen Isocyanaten und Additiven hergestellt werden, da ansonsten Unverträglichkeiten auftreten, die dazu führen, dass Schaumdefekte auftreten oder der Schaum nicht herstellbar ist.

WO 2008/071622 beschreibt einen Polyurethanweichschaumstoff, erhältlich durch Vermischen von a) Polyisocyanat mit b) mindestens einer höhermolekularen Verbindung mit mindestens zwei reaktiven Wasserstoffatomen, c) einem hyperverzweigten Polyester c1) des Typs AₓB_{y}, mit x mindestens 1,1 und y mindestens 2,1, und/oder hyperverzweigtem Polycarbonat c2), d) gegebenenfalls niedermolekularen Kettenverlängerungsmitteln und/oder Vernetzungsmittel, e) Katalysator, f) Treibmitteln und g) gegebenenfalls sonstigen Zusatzstoffen. Die dort beschriebenen Polyurethanweichschaumstoffe weisen ein gutes Eigenschaftsprofil auf, doch könnte ihre Feucht-Wärme-Lagerstabilität noch verbessert werden.

Aufgabe der vorliegenden Erfindung war es, Polyurethanschaumstoffe zu liefern, die eine hohe Härte und dennoch eine hohe Elastizität aufweisen.

Weiter war es Aufgabe der vorliegenden Erfindung, solche Polyurethanschaumstoffe zu liefern, die einen breiten Verarbeitungsbereich zeigen und als Blockweichschaumstoffe oder Formschaumstoffe herstellbar sind.

Schließlich war es Aufgabe der Erfindung, Polyurethanschaumstoffe mit hohen Komforteigenschaften in Form von Dämpfungseigenschaften zu liefern, beispielsweise einer niedrigen Transmission (Vibrationsdämpfung) bei der Resonanzfrequenz. Außerdem sollte die Feucht-Wärme-Lagerstabilität der Polyurethanschaumstoffe verbessert werden.

Gelöst wird die Aufgabe durch ein Verfahren zur Herstellung von elastischen Polyurethanweichschaumstoffen, bei dem (a) Polyisocyanate mit (b) mindestens einer höhermolekularen Verbindung mit mindestens zwei reaktiven Wasserstoffatomen, (c) hyperverzweigten Polyetherolen, (d) gegebenenfalls niedermolekularen Kettenverlängerungsmitteln und/oder Vernetzungsmitteln, (e) Katalysatoren, (f) Treibmitteln und (g) gegebenenfalls sonstigen Zusatzstoffen zu einer Reaktionsmischung vermischt und zum Polyurethanweichschaumstoff ausgehärtet werden, wobei die hyperverzweigten Polyetherole Kondensationsprodukte aus tri- und höherfunktionellen Alkoholen und gegebenenfalls difunktionellen Alkoholen sind, die durch Eintopffahrweise, bei der das Monomer vollständig vorgelegt und die Reaktion in einem rückvermischten Reaktor durchgeführt wird, erhältlich sind, sowie durch die elastischen Polyurethanweichschaumstoffe selbst.

Polyurethanweichschaumstoffe im Sinn der Erfindung sind Polyisocyanat-Polyadditionsprodukte, die Schaumstoffe gemäß DIN 7726 darstellen und eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa aufweisen. Vorzugsweise weisen Polyurethanweichschaumstoffe im Sinn der Erfindung eine Offenzelligkeit nach DIN ISO 4590 von vorzugsweise größer 85 %, besonders bevorzugt größer 90 % auf.

Die zur Herstellung der erfindungsgemäßen Polurethanweichschaumstoffe verwendete Polyisocyanatkomponente (a) umfasst alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphthylendiisocyanat (NDI) oder Mischungen daraus.

Bevorzugt werden 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), 2,4- oder 2,6-Toluylendiisocyanat (TDI) oder deren Mischungen, Isophorondiisocyanat (IPDI) oder dessen Oligomere, Hexamethylendiisocyanat (HDI) oder dessen Oligomere oder Mischungen der genannten Isocyanate verwendet. Die bevorzugt verwendeten Isocyanate können auch Uretdion-, Allophanat-, Uretonimin-, Harnstoff-, Biuret-, Isocyanurat- oder Iminooxadiazintriongruppen enthalten. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Das Polyisocyanat (a) wird alternativ in Form von Polyisocyanatprepolymeren eingesetzt. Diese Polyisocyanatprepolymere sind erhältlich, indem vorstehend beschriebene Polyisocyanate (a1), beispielsweise bei Temperaturen von 30 bis 100 °C, bevorzugt bei etwa 80 °C, mit Polyolen (a2), zum Prepolymer umgesetzt werden. Vorzugsweise werden zur Herstellung der erfindungsgemäßen Prepolymere Polyole auf Basis von Polyestern, beispielsweise ausgehend von Adipinsäure, oder Polyether, beispielsweise ausgehend von Ethylenoxid und/oder Propylenoxid, verwendet.

Polyole (a2) sind dem Fachmann bekannt und beispielsweise beschrieben im "Kunststoffhandbuch, 7, Polyurethane", Carl Hanser Verlag, 3. Auflage 1993, Kapitel 3.1. Bevorzugt werden als Polyole (a2) höhermolekulare Verbindungen mit mindestens zwei reaktiven Wasserstoffatomen, wie unter (b) beschrieben, eingesetzt.

In einer Ausführungsform kann zur Herstellung des Prepolymers ein hyperverzweigter Polyether mit gegenüber Isocyanaten reaktiven Wasserstoffatomen als Bestandteil (a2) eingesetzt werden.

Gegebenenfalls können der Umsetzung zum Polyisocyanatprepolymer noch Kettenverlängerungsmittel (a3) zugegeben werden. Als Kettenverlängerungsmittel (a3) für das Prepolymer sind zwei- oder dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Propylenoxid, geeignet.

Als höhermolekulare Verbindung mit mindestens zwei reaktiven Wasserstoffatomen (b) kommen die zur Herstellung von Polyurethan-Weichschaumstoffen üblichen und bekannten Verbindungen zum Einsatz.

Als Verbindung mit mindestens zwei aktiven Wasserstoffatomen (b) kommen bevorzugt Polyesteralkohole und/oder Polyetheralkohole mit einer Funktionalität von 2 bis 8, insbesondere von 2 bis 6, vorzugsweise von 2 bis 4 und einem mittleren Äquivalentmolekulargewicht im Bereich von 400 bis 3000 g/mol, vorzugsweise 1000 bis 2500 g/mol, in Betracht.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Di- oder Multimetallcyanidverbindungen, so genannte DMC-Katalysatoren, eingesetzt werden. Es ist möglich, auch den zur Herstellung des Prepolymeren eingesetzten Polyetheralkohol in der Komponente b) einzusetzen.

Zur Herstellung von Weichschäumen und Integralschäumen werden insbesondere zweifach und/oder dreifach funktionelle Polyetheralkohole eingesetzt.

Weiter können als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Die Hydroxylzahl der Polyesteralkohole liegt vorzugsweise im Bereich zwischen 40 und 100 mg KOH/g.

Als Polyole eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Bei einem polymermodifizierten Polyol handelt es sich um ein so genanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-% aufweist.

Polymerpolyole sind beispielsweise in EP-A-250 351, DE 111 394, US 3 304 273, US 3 383 351, US 3 523 093, DE 1 152 536 und DE 1 152 537 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyol, bevorzugt Polyesterol oder Polyetherol, hergestellt. Die Seitenketten entstehen im Allgemeinen durch Übertragung der Radikale von wachsenden Polymerketten auf Polyole. Das Polymer-Polyol enthält neben den Propfcopolymerisaten überwiegend die Homopolymere der Olefine, dispergiert in unverändertem Polyol.

In einer bevorzugten Ausführungsform werden als Monomere Acrylnitril, Styrol, insbesondere ausschließlich Styrol verwendet. Die Monomere werden gegebenenfalls in Gegenwart weiterer Monomerer, eines Makromers, eines Moderators und unter Einsatz eines Radikal-Initiators, meist Azo- oder Peroxidverbindungen, in einem Polyesterol oder Polyetherol als kontinuierlicher Phase polymerisiert.

Ist in der höhermolekularen Verbindung (b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Unter hyperverzweigten Polyetherpolyolen (c) werden im Rahmen dieser Erfindung unvernetzte Polymermoleküle mit Hydroxyl- und Ethergruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch lineare Bereiche mit funktionellen Seitengruppen aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Die hyperverzweigten Polyetherole (c) weisen neben den Ethergruppen, die das Polymergerüst bilden, end- oder seitenständig mindestens drei, bevorzugt mindestens sechs, besonders bevorzugt mindestens zehn OH-Gruppen auf. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hyperverzweigten Polyetherole (c) weisen zumeist nicht mehr als 500 end- oder seitenständige funktionelle Gruppen, bevorzugt nicht mehr als 100 end- oder seitenständige funktionelle OH-Gruppen auf.

Die hyperverzweigten Polyetherole (c) werden durch Kondensation von di-, tri- oder höhertunktionellen Alkoholen erhalten.

Vorzugsweise ist das erfindungsgemäß eingesetzte hyperverzweigte Polyetherol das Kondensationsprodukt aus im Mittel mindestens 3, besonders bevorzugt mindestens 4, weiter bevorzugt mindestens 5 und insbesondere mindestens 6 di-, tri- oder höherfunktionellen Alkoholen. Dabei ist weiter bevorzugt, dass es sich dabei um das Kondensationsprodukt aus im Mittel mindestens 3, besonders bevorzugt mindestens 4, speziell mindestens 5 und insbesondere mindestens 6 tri- oder höherfunktionellen Alkoholen handelt.

Unter "hyperverzweigt" wird im Zusammenhang mit der vorliegenden Erfindung verstanden, dass der Verzweigungsgrad (Degree of Branching, DB), das heißt die mittlere Anzahl dendritischer Verknüpfungen plus mittlere Anzahl der Endgruppen pro Molekül, geteilt durch die Summe der mittlere Anzahl von dendritischen, linearen und terminalen Verknüpfungen, multipliziert mit 100, 10 bis 99,9 %, bevorzugt 20 bis 99 %, besonders bevorzugt 20 bis 95 % beträgt. Unter "Dendrimer" wird im Zusammenhang mit der vorliegenden Erfindung verstanden, dass der Verzweigungsgrad 99,9 bis 100 % beträgt. Zur Definition des "Degree of Branching" siehe H. Frey et al., Acta Polym. 1997, 48, 30.

Als tri- und höherfunktionelle Alkohole können zum Beispiel Triole, wie Trimethylolmethan, Trimethylolethan, Trimethylolpropan (TMP), 1,2,4-Butantriol, Tris-hydroxymethyl-isocyanurat und Tris-hydroxyethyl-isocyanurat (THEIC) eingesetzt werden. Ebenso können Tetrole verwendet werden, wie Bis-Trimethylolpropan (Di-TMP) oder Pentaery-thrit. Weiterhin können höherfunktionelle Polyole, wie Bis-Pentaerythrit (Di-Penta) oder Inositole verwendet werden. Weiterhin können auch Alkoxylierungsprodukte der vorgenannten Alkohole sowie von Glycerin verwendet werden, vorzugsweise mit 1-40 Alkylenoxideinheiten pro Molekül.

Besonders bevorzugt werden als tri- und höherfunktionelle Alkohole aliphatische Alkohole und insbesondere solche mit primären Hydroxylgruppen eingesetzt, wie Trimethylolmethan, Trimethylolethan, Trimethylolpropan, Di-TMP, Pentaerythrit, Di-Penta und deren Alkoxylate mit 1-30 Ethylenoxideinheiten pro Molekül sowie Glycerin-Ethoxylate mit 1-30 Ethylenoxideinheiten pro Molekül. Ganz besonders bevorzugt werden verwendet Trimethylolpropan, Pentaerythrit und deren Ethoxylate mit im Mittel 1-20 Ethylenoxideinheiten pro Molekül sowie Glycerin-Ethoxylate mit 1-20 Ethylenoxideinheiten pro Molekül. Ebenfalls können die genannten Alkohole in Mischung eingesetzt werden.

Weniger geeignet als tri- und höherfunktionelle Alkohole sind Verbindungen, die an zwei unmittelbar benachbarten C-Atomen OH-Gruppen tragen. Diese Verbindungen neigen unter erfindungsgemäßen Bedingungen zu Eliminierungsreaktionen, die gegenüber der Veretherungsreaktion bevorzugt sein können. Die sich bildenden ungesättigten Verbindungen bilden unter erfindungsgemäßen Veretherungsbedingungen Nebenprodukte, die dazu führen, dass das Reaktionsprodukt für den Einsatz in technisch relevanten Formulierungen unbrauchbar ist. Insbesondere treten solche Nebenreaktionen bei Glycerin auf.

Die tri- und höherfunktionellen Alkohole können auch in Mischung mit difunktionellen Alkoholen eingesetzt werden. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Dodecandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, difunktionelle Polyetherpolyole auf Basis von Ethylenoxid, Propylenoxid, Butylenoxid oder deren Gemischen mit 1 bis 50, bevorzugt 2 bis 10 Alkylenoxid-Einheiten oder Polytetrahydrofuran (PTFF) mit einem zahlenmittleren Molekulargewicht von 160 bis 2000 g/mol. Selbstverständlich können die difunktionellen Alkohole auch in Mischungen eingesetzt werden. Bevorzugte difunktionelle Alkohole sind Ethylenglykol, Diethylenglykol, Triethylenglykol, 1,2- und 1,3-Propandiol, Dipropylenglykol, Tripropylenglykol, Neopentylglykol , 1, 4-Butandiol, 1,5-Pentandiol, Hexandiol, Dodecandiol, Bis(4-hydroxycyclohexyl)methan, und difunktionelle Polyetherpolyole auf Basis von Ethylenoxid und/oder Propylenoxid, oder deren Gemische. Besonders bevorzugte difunktionelle Alkohole sind Ethylenglykol, Diethylenglykol, Triethylenglykol, 1,2-Propandiol, Dipropylenglykol, Tripropylenglykol, 1,4-Butandiol, Hexandiol, Bis(4-hydroxycyclohexyl)methan, und difunktionelle Polyetherpolyole auf Basis von Ethylen-oxid und/oder Propylenoxid, oder deren Gemische.

Die Diole dienen zur Feineinstellung der Eigenschaften des Polyetherpolyols. Falls difunktionelle Alkohole eingesetzt werden, wird das Verhältnis von difunktionellen Alkoholen zu den tri- und höherfunktionellen Alkoholen vom Fachmann je nach den gewünschten Eigenschaften des Polyethers festgelegt. Im Regelfall beträgt die Menge des oder der difunktionellen Alkohole 0 bis 99 mol-%, bevorzugt 0 bis 80 mol-%, besonders bevorzugt 0 bis 75 mol-% und ganz besonders bevorzugt 0 bis 50 mol-% bezüglich der Gesamtmenge aller Alkohole. Dabei können durch im Laufe der Reaktion abwechselnde Zugabe von tri- und höherfunktionellen Alkoholen und Diolen auch Blockcopolyether, beispielsweise Diol-terminierte Polyether erhalten werden.

Die difunktionellen Alkohole können auch zu OH-terminierten Oligomeren vorkondensiert werden und anschließend kann der tri- oder höherfunktionelle Alkohol zugegeben werden. Auf diese Weise können ebenfalls hyperverzweigte Polymere mit linearen Blockstrukturen erhalten werden.

Weiter können auch Monoole zur Regelung der OH-Funktionalität während oder nach der Umsetzung der tri- und höherfunktionellen Alkohole zugegeben werden. Solche Monoole können beispielsweise lineare oder verzweigtkettige aliphatische oder aromatische Monoole sein. Vorzugsweise weisen diese mehr als 3, besonders bevorzugt mehr als 6 C-Atome auf. Weiterhin geeignet als Monoole sind monofunktionelle Polyetherole. Vorzugsweise werden maximal 50 mol-% Monool, bezogen auf die Gesamtmenge des tri- und höherfunktionellen Alkohols zugegeben.

Zur Beschleunigung der Reaktion werden saure Katalysatoren oder Katalysatorgemische zugegeben. Geeignete Katalysatoren sind zum Beispiel Säuren mit einem pK_{S}-Wert von weniger als 2,2, besonders bevorzugt sind starke Säuren.

Beispiel für Säuren mit einem pK_{S}-Wert von weniger als 2,2 sind beispielsweise Phosphorsäure (H₃PO₄), Phosphorige Säure (H₃PO₃), Pyrophosphorsäure (H₄P₂O₇), Polyphosphorsäure, Hydrogensulfat (HSO₄⁻), Schwefelsäure (H₂SO₄), Perchlorsäure, Salzsäure, Bromwasserstoffsäure, Chlorsulfonsäure, Methansulfonsäure, Trichlormethansulfonsäure, Trifluormethansulfonsäure, Benzolsulfonsäure oder p-Toluolsulfonsäure.

Weitere Beispiele für saure Katalysatoren sind saure Ionenaustauscher oder lonenaustauscherharze. Ionenaustauscher ist die Sammelbezeichnung für feste Stoffe oder Flüssigkeiten, welche fähig sind, positiv oder negativ geladene Ionen aus einer Elektrolyt-Lösung unter Abgabe äquivalenter Mengen anderer Ionen aufzunehmen. Bevorzugt werden feste Körner und Partikel verwendet, deren Matrix durch Kondensation (Phenol-Formaldehyd) oder durch Polymerisation (Copolymere aus Styrol und Divinylbenzol sowie Methacrylaten und Divinylbenzol) erhalten wurden.

Die verwendeten sauren Ionenaustauscher tragen zum Beispiel Sulfonsäure-Gruppen, Carbonsäure- oder Phosphonsäure-Gruppen. Auch können Ionenaustauscher verwendet werden, die ein hydrophiles Cellulose-Gerüst besitzen oder aus vernetztem Dextran oder Agarose bestehen, und saure funktionelle Gruppen, zum Beispiel Carboxylmethyl- oder Sulfoethylgruppen, tragen. Es können auch anorganische Ionenaustauscher, wie Zeolithe, Montmorillonite, Palygorskite, Bentonite und andere Aluminiumsilicate, Zirconiumphosphat, Titanwolframat und Nickelhexacyanoferrat(II) verwendet werden. Zu Ionenaustauschern siehe auch RÖMPP, Chemisches Lexikon, Online Version 3.0, oder "lon Exchangers" von F. De Dardel und T. V. Arden, erschienen in Ullmann's Encyclopedia of Industrial Chemistry, Electronic Release 2007. Saure Ionenaustauscher sind beispielsweise in fester oder gelöster Form erhältlich unter den Produktbezeichnung Amberlite™, Ambersept™ oder Amberjet™ von der Fa. Rohm und Haas.

Besonders bevorzugte Katalysatoren sind Phosphorsäure, Polyphosphorsäure, Chlorsulfonsäure, Methansulfonsäure, Trichlormethansulfonsäure, Trifluormethansulfonsäure, Benzolsulfonsäure, p-Toluolsulfonsäure und saure Ionenaustauscher. Ganz besonders bevorzugt sind Methansulfonsäure, Trifluormethansulfonsäure, p-Toluolsulfonsäure und saure Ionenaustauscher.

Die Zugabe der Säure als Katalysator erfolgt im Allgemeinen in einer Menge von 50 ppm bis 10 Gew.-%, bevorzugt von 100 ppm bis 5 Gew.-%, besonders bevorzugt 1000 ppm bis 3 Gew.-% bezogen auf die Menge des eingesetzten Alkohols oder Alkoholgemisches.

Wird ein sauer Ionenaustauscher als Katalysator verwendet, so setzt man üblicherweise eine Menge von 1000 ppm bis 30 Gew.-%, bevorzugt von 1 bis 25 Gew.-% , besonders bevorzugt 1 bis 20 Gew.-% bezogen auf die Menge des eingesetzten Alkohols oder Alkoholgemisches zu. Selbstverständlich können die Katalysatoren auch in Mischung eingesetzt werden.

Ferner ist es möglich, sowohl durch Zugabe des geeigneten Katalysators, als auch durch Wahl einer geeigneten Temperatur die Polykondensationsreaktion zu steuern. Weiterhin lässt sich über die Zusammensetzung der Ausgangskomponenten und über die Verweilzeit das mittlere Molekulargewicht des Polymeren sowie dessen Struktur einstellen.

Die Umsetzung erfolgt üblicherweise bei einer Temperatur von 0 bis 300 °C, bevorzugt 0 bis 250 °C, besonders bevorzugt bei 60 bis 250 °C und ganz besonders bevorzugt bei 80 bis 250 °C in Substanz oder in Lösung. Dabei können allgemein alle Lösungsmittel verwendet werden, die gegenüber den jeweiligen Edukten inert sind. Wird Lösungsmittel eingesetzt, werden vorzugsweise organische Lösungsmittel, wie zum Beispiel Decan, Dodecan, Benzol, Toluol, Chlorbenzol, Xylol, Dimethylformamid, Dimethylacetamid oder Solventnaphtha verwendet.

In einer besonders bevorzugten Ausführungsform wird die Kondensationsreaktion in Substanz durchgeführt, das heißt ohne Zugabe von Lösungsmittel. Das bei der Reaktion freiwerdende Wasser kann zur Beschleunigung der Reaktion aus dem Reaktionsgleichgewicht entfernt werden, zum Beispiel destillativ, gegebenenfalls bei vermindertem Druck.

Die Herstellung der erfindungsgemäßen hochfunktionellen Polyetherpolyole erfolgt zumeist in einem Druckbereich von 0,1 mbar bis 20 bar, bevorzugt bei 1 mbar bis 5 bar, in Reaktoren, die im Batchbetrieb, halbkontinuierlich oder kontinuierlich betrieben werden.

Die Reaktion wird in einer so genannten "Eintopffahrweise" durchgeführt, in der das Monomer vollständig vorgelegt und die Reaktion in einem rückvermischten Reaktor durchgeführt wird.

Die Reaktion kann gegebenenfalls auch unter Zuhilfenahme von Ultraschall oder Mikrowellenstrahlung durchgeführt werden.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Kondensationsprodukt lagerstabil ist.

Weiterhin kann man den Katalysator deaktivieren, zum Beispiel durch Zugabe einer basischen Komponente, wie einer Lewis-Base oder einer organischen oder anorganischen Base.

In einer weiteren bevorzugten Ausführungsform können die erfindungsgemäßen Polyetherole neben den bereits durch die Reaktion erhaltenden OH-Gruppen weitere funktionelle Gruppen enthalten. Diese umfassen Mercaptogruppen, primäre, sekundäre oder tertiäre Aminogruppen, Estergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder kurz- oder langkettige Alkylreste. Dazu werden Modifizierungsreagenzien eingesetzt. Dabei handelt es sich um Verbindungen, die eine solche weitere funktionelle Gruppe und eine gegenüber Alkohol reaktiv Gruppe aufweisen. Solche gegenüber Alkohol reaktiven Gruppen können beispielsweise Isocyanatgruppen, Säuregruppen, Säurederivate, Epoxidgruppen oder Alkoholgruppen sein. Dabei können die Modifizierungsreagenzien vor oder während dem Umsetzen der tri- oder höherfunktionellen Alkohole zum hochfunktionellen Polyether zugegeben werden.

Setzt man den tri- oder höherfunktionellen Alkohol oder die Alkoholmischung in Gegenwart von Modifizierungsreagenzien in einem Schritt um, so erhält man ein Polyether-Polymer mit statistisch verteilten, von den Hydroxylgruppen verschiedenen Funktionalitäten. Eine derartige Funktionalisierung lässt sich zum Beispiel durch Zusatz von Verbindungen erzielen, die Mercaptogruppen, primäre, sekundäre oder tertiäre Aminogruppen, Estergruppen, Carbonsäuregruppen oder deren Derivate, Arylreste oder kurz- oder langkettige Alkylreste tragen.

Eine nachträgliche Funktionalisierung kann man erhalten, indem das erhaltene hochfunktionelle, hoch- oder hyperverzweigte Polyetherpolyol in einem zusätzlichen Verfahrensschritt mit einem geeigneten Funktionalisierungsreagenz, welches mit den OH-Gruppen des Polyethers reagieren kann, umsetzt.

Die erfindungsgemäßen hochfunktionellen Polyether können zum Beispiel durch Zugabe von Säure-, Säureanhydrid-, Säurehalogenid- oder Isocyanatgruppen enthaltenden Modifizierungsreagenzien modifiziert werden.

In einer bevorzugten Ausführungsform können die erfindungsgemäßen hyperverzweigten Polyetherole auch durch Umsetzung mit Alkylenoxiden, zum Beispiel Ethylenoxid, Propylenoxid, Butylenoxid oder deren Gemischen, als Modifizierungsreagenzien in hochfunktionelle Polyetherpolyole enthaltend lineare Polyetherketten mit einstellbarer Polarität überführt werden. Dabei wird die Alkoxylierungsreaktion nach dem Fachmann bekannten, üblichen Verfahren durchgeführt, wie sie auch zur Herstellung von Polyetherolen (b) eingesetzt werden.

Die konkrete Wahl der Reaktionsbedingungen, wie Druck und Temperatur, und die Konzentration der Alkohole und gegebenenfalls der Modifizierungsreagenzien ist von der Reaktivität der Alkohole und der Modifizierungsreagenzien abhängig. Prinzipiell führt eine geringere Temperatur, eine höhere Reaktivität der Modifizierungsreagenzien und eine höhere Konzentration der Modifizierungsreagenzien eher zu niedermolekularen modifizierten Alkoholen, wobei eine höhere Temperatur, eine geringere Konzentration an Modifizierungsreagenzien und eine geringere Reaktivität der Modifizierungsreagenzien eher zu Kondensationsprodukten führt, die mehrere di-, tri- und höherfunktionellen Alkoholen pro Molekül aufweisen. Die Reaktionsbedingungen im erfindungsgemäßen Verfahren werden dabei vorzugsweise so gewählt, dass die erhaltenen Polyetherpolyole Kondensationsprodukte aus im Mittel mindestes 3, besonders bevorzugt mindestens 4, weiter bevorzugt mindestens 5 und insbesondere mindestens 6 di-, tri- oder höherfunktionellen Alkoholen aufweisen. Weiter bevorzugt werden die Reaktionsbedingungen so gewählt, dass die erhaltenen hochfunktionellen Polyetherpolyole Kondensationsprodukte aus im Mittel mindestens 3, besonders bevorzugt mindestens 4, weiter bevorzugt mindestens 5 und insbesondere mindestens 6 tri- oder höherfunktionellen Alkoholen sind. Die Anzahl der di-, tri- oder höherfunktionellen Alkohole im Kondensationsprodukt lässt sich beispielsweise aus dem durch GPC ermittelten zahlenmittleren Molekulargewicht Mₙ bestimmen.

Das zahlenmittlere Molekulargewicht der erfindungsgemäß eingesetzten Polyetherole beträgt im Allgemeinen 400 bis 20000 g/mol, bevorzugt 500 bis 10000 g/mol, weiter bevorzugt 600 bis 5000 g/mol und insbesondere bevorzugt 800 bis 2000 g/mol.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Umsetzungsprodukt durch Strippen, das heißt durch Entfernen von niedermolekularen, flüchtigen Verbindungen, gereinigt. Dazu kann nach Erreichen des gewünschten Umsatzgrades der Katalysator desaktiviert werden. Anschließend werden die niedermolekularen flüchtigen Bestandteile, zum Beispiel Lösungsmittel, Ausgangsmonomere, leichtflüchtige Spaltprodukte, leichtflüchtige oligomere oder cyclische Verbindungen oder Wasser destillativ, gegebenenfalls unter Einleitung eines Gases, vorzugsweise Stickstoff, Kohlendioxid oder Luft, gegebenenfalls bei vermindertem Druck, entfernt. In einer bevorzugten Ausführungsform wird das Produkt in einem Dünnschichtverdampfer von flüchtigen Bestandteilen befreit.

Aufgrund der Beschaffenheit der Ausgangsmonomere ist es möglich, dass aus der Umsetzung Kondensationsprodukte mit unterschiedlichen Strukturen resultieren können, die Verzweigungen und cyclische Einheiten, aber keine Vernetzungen aufweisen. Die Anzahl der reaktiven Gruppen ergibt sich dabei aus der Beschaffenheit der eingesetzten Monomere und dem Polykondensationsgrad, der so zu wählen ist, dass der Gelpunkt nicht erreicht wird.

Die erfindungsgemäß als Komponente (c) verwendeten hochfunktionellen hyperverzweigten Polyetherole lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Im Allgemeinen werden bei der Herstellung des erfindungsgemäßen Polyurethan-Weichschaums die Polyisocyanate (a), die höhermolekularen Verbindungen mit mindestens zwei reaktiven Wasserstoffatomen (b), hyperverzweigte Polyether (c) und gegebenenfalls Kettenverlängerungs- und/oder Vernetzungsmittel (d) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c) und gegebenenfalls (d) und (f) 0,7 bis 1,25:1, vorzugsweise 0,80 bis 1,15:1 beträgt. Ein Verhältnis von 1:1 entspricht dabei einem Isocyanatindex von 100. Der Anteil an Komponente (c) beträgt vorzugsweise zwischen 0,01 und 90, besonders bevorzugt zwischen 0,5 und 50 und insbesondere bevorzugt zwischen 0,7 und 30 Gew.-% bezogen auf das Gesamtgewicht der Komponenten (a) bis (g).

Als Kettenverlängerungsmittel und/oder Vernetzungsmittel (d) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere von 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (d) Monoethylenglycol, 1,4-Butandiol und/oder Glycerin eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b), (c) und (d) zum Einsatz.

Als Katalysatoren (e) zur Herstellung der Polyurethanschaumstoffe werden bevorzugt Verbindungen verwendet, welche die Reaktion der Hydroxylgruppen enthaltenden Verbindungen der Komponente (b), (c) und gegebenenfalls (d) mit den Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, N,N,N',N'-Tetramethyl-hexan-diamin, Pentamethyl-diethylentriamin, Tetramethyl-diaminoethylether, Bis-(dimethyl-aminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-etyhlhexanoat und Bismutoctanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.%, insbesondere 0,05 bis 2 Gew.% Katalysator bzw. Katalysatorkombination, bezogen auf das Gewicht der Komponente (b), (c) und (d).

Ferner sind bei der Herstellung von Polyurethanschaumstoffen Treibmittel (f) zugegen. Als Treibmittel (f) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane^{®} 365 mfc, oder Gase, wie Kohlendioxid. In einer bevorzugten Ausführungsform wird als Treibmittel eine Mischung dieser Treibmittel, enthaltend Wasser, eingesetzt. Wird kein Wasser als Treibmittel eingesetzt, werden vorzugsweise ausschließlich physikalische Treibmittel verwendet.

Der Gehalt an physikalischen Treibmitteln (f) liegt in einer bevorzugten Ausführungsform im Bereich zwischen 1 und 20 Gew.-%, insbesondere 5 und 20 Gew.-%, die Menge an Wasser vorzugsweise im Bereich zwischen 0,5 und 10 Gew.-%, insbesondere 1 und 5 Gew.-%. Bevorzugt wird Kohlendioxid als Treibmittel (f) eingesetzt, das entweder online, das heißt direkt am Mischkopf, oder über den Vorratstank bei Batch-Fahrweise zugeführt wird.

Als Hilfsmittel und/oder Zusatzstoffe (g) werden beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteristatisch wirkende Substanzen eingesetzt.

Bei der technischen Herstellung von Polyurethan-Schaumstoffen ist es üblich, die Verbindungen mit mindestens zwei aktiven Wasserstoffatomen (b) und ein oder mehrere der Einsatzstoffe (c) bis (g), soweit nicht bereits zur Herstellung von Polyisocyanatpre-polymeren verwendet, vor der Umsetzung mit dem Polyisocyanat (a) zu einer so genannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate mit den Verbindungen mit mindestens zwei aktiven Wasserstoffatomen im Beisein der genannten Treibmittel, Katalysatoren und Hilfs- und/oder Zusatzstoffe (Polyolkomponente) zur Reaktion gebracht.

Im Allgemeinen werden bei der Herstellung der erfindungsgemäßen Polyurethanweichschaumstoffe die Polyisocyanate (a), die höhermolekularen Verbindungen mit mindestens zwei reaktiven Wasserstoffatomen (b), hyperverzweigter Polyether (c), und gegebenenfalls die Kettenverlängerungs- und/oder Vernetzungsmittel (d) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c) und gegebenenfalls (d) und (f) 0,7 bis 1,25:1, vorzugsweise 0,80 bis 1,15:1 beträgt. Ein Verhältnis von 1:1 entspricht dabei einem Isocyanatindex von 100.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem so genannten Zweikomponentenverfahren zu verfahren, bei dem, wie oben ausgeführt, eine Polyolkomponente hergestellt und mit Polyisocyanat a) verschäumt wird. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C.

Erfindungsgemäße Polyurethanweichschäume werden vorzugsweise als Polsterungen für Möbel und Matratzen, orthopädische Produkte, wie beispielsweise Kissen, für Polsterungen im Automobilbereich, wie Armlehnen, Kopfstützen und insbesondere Autositze verwendet und weisen bei gleichbleibenden Härten verbesserte Werte für die Elastizität auf. Weiter weisen erfindungsgemäße Polyurethanweichschaumstoffe bei Verwendung von hyperverzweigten Polyethern im Vergleich zur Verwendung von hyperverzweigten Polyestern verbesserte Feucht-Wärme-Lagerbeständigkeiten auf.

Ein weiterer Vorteil der erfindungsgemäßen Polyurethane ist ein ausgeprägtes Dämpfungsverhalten. Dabei wird das Dämpfungsverhalten bestimmt, indem der Probeschaumstoff mit einer Dicke von 10 cm bei Normklima mit 50 kg in einem Frequenzbereich von 2-20 Hz mit einer Anregungsamplitude von +/- 1 mm angeregt wird. Das Verhältnis der gemessenen Auslenkung der Schaumstoffoberseite zu der Anregung, jeweils in mm, ergibt die Transmission. Die Frequenz, bei der maximale Auslenkung gemessen wird, wird als Resonanzfrequenz bezeichnet. Da der menschliche Körper in einem Frequenzbereich von 2-20 Hz besonders sensibel auf Schwingungen reagiert, sollte in diesem Bereich die Transmission, besonders im Bereich der Resonanzfrequenz, möglichst gering sein.

Im Folgenden soll die Erfindung im Rahmen von Beispielen für den Einsatz von hyperverzweigten Polyolen in Weichschäumen verdeutlicht.

Im Rahmen der Beispiele wurde die Rohdichte gemäß DIN EN ISO 845 bestimmt. Weiter wurde die Stauchhärte gemäß DIN EN ISO 3386 und die Rückprallelastizität gemäß DIN 53573 bestimmt.

### Beispiele

### Einsatzstoffe:

Polyol 1: Polyoxypropylen-Polyoxyethylen-Polyol, OH-Zahl: 28, Funktionalität: 2,7
Polyol 2: Graftpolyol auf der Basis von Styrol-Acrylnitril mit einem Feststoffgehalt von 45 % in einem Polyoxypropylen-Polyoxyethylen-Polyol, OH-Zahl: 20, Funktionalität: 2,7
Polyol 3: Polyoxypropylen-Polyoxyethylen-Polyol, OH-Zahl: 42, Funktionalität: 2,6
Polyol 4: Poletherpolyol, OH-Zahl: 250, Funktionalität: 3
Katalyse: Standard-Amin-Katalyse
HB Polyol 1: Polyol aus Pentaerythrit / Triethylenglykol, OH-Zahl: 536, hergestellt gemäß nachstehender Arbeitsvorschrift:
   Die Polymerisation wird in einem 4 L Glaskolben, ausgerüstet mit einem Rührer, Rückflusskühler und einer 20 cm langen Füllkörperkolonne mit Destillationsbrücke und Vakuumanschluss durchgeführt. Die Mischung aus 1225,4 g Pentaerythrit (9,0 mol), 1351,2 g Triethylenglykol (9,0 mol) und 2,0 g p-Toluolsulfonsäure-Monohydrat (0,08 Gew.-%) wird langsam mittels Ölbad auf 180 °C erwärmt. Nach Erreichen der Reaktionstemperatur wird evakuiert und das Reaktionsgemisch 15 h bei einem Druck von 200 mbar gerührt. Das bei der Reaktion gebildete Reaktionswasser wird per Destillation entfernt. Nach ca. 17 h Reaktionszeit sind insgesamt 596 g wässrige Phase abdestilliert worden.

Das Produkt wies folgende Kennzahlen auf:
M_{w}, Mₙ (GPC; DMF) 14.100, 900 [g/mol]
OHZ: 536 mg KOH / g Polymer
Isocyanat 1: Diphenylmethandiisocyanat, NCO-Gehalt: 32,8
Isocyanat 2: Toluylendiisocyanat/Diphenylmethandiisocyanat 80/20, NCO-Gehalt: 44,8
Katalysator: Low-Emission-Amin-Katalyse

### Beispiele 1 - 3 und Vergleichsbeispiel 1

Es wurden MT-Formschaumstoffe (Formschaumstoffe auf Basis MDI/TD) hergestellt und deren mechanische Eigenschaften bestimmt.

Die Zusammensetzung der Formulierungen und die Ergebnisse der mechanischen Prüfungen sind der nachstehenden Tabelle zu entnehmen.

| Formulierung | Vergleichsbeispiel | | Beispiel | |
|---|---|---|---|---|
| | 1 | 1 | 2 | 3 |
| Polyol 1 [MT*] | 74 | 74 | 74,0 | 74,0 |
| Polyol 2 [MT] | 25 | 25 | 25 | 25 |
| Polyol 3 [MT] | 1,0 | 1,0 | 1,0 | 1,0 |
| HB Polyol 1 [MT] | - | 2,0 | 4,0 | 7,0 |
| Wasser [MT] | 2,8 | 2,8 | 2,8 | 2,8 |
| Stabilisator [MT] | 0,8 | 0,8 | 0,8 | 0,8 |
| Katalysator [MT] | 0,55 | 0,55 | 0,55 | 0,55 |
| Isocyanat 2 [Index] | 100 | 100 | 100 | 100 |

| Eigenschaften | | | | |
|---|---|---|---|---|
| Rohdichte, Kern [kg/m³] | 47,9 | 47,5 | 50,3 | 48,8 |
| Stauchhärte 40 % [kPa] | 4,8 | 4,9 | 5,9 | 6,0 |
| Rückprallelastizität [%] | 65 | 65 | 67 | 66 |

| | | | | |
|---|---|---|---|---|
| *MT = Massenteile | | | | |

Die Tabelle zeigt, dass es durch Einsatz von hyperverzweigten Polyethern zu dem gewünschten deutlichen Anstieg der Stauchhärte bei gleichzeitig gleichbleibender bzw. sogar ebenfalls erhöhter Rückprallelastizität kommt (Beispiele 1 bis 3).

### Beispiele 4 - 9 und Vergleichsbeispiel 2 und 3

Es wurden MT-Formschaumstoffe hergestellt und deren mechanischen Eigenschaften bestimmt.

Die Zusammensetzung der Formulierungen und die Ergebnisse der mechanischen Prüfungen sind der nachstehenden Tabelle zu entnehmen.

Dabei zeigt die nachfolgende Tabelle, dass es durch Einsatz von hyperverzweigten Polyethern zu dem gewünschten deutlichen Anstieg der Stauchhärte bei gleichzeitig ebenfalls erhöhter Rückprallelastizität kommt (Beispiele 4, 5, 7 und 8). Man erkennt außerdem, dass 4 Teile des hyperverzweigten Polyethers zu einer ähnlichen Härteerhöhung führen wie 15 Teile eines Graftpolyols, wobei zusätzlich noch die Elastizität zunimmt und Dichte abnimmt (Beispiel 4, Vergleichsbeispiel 2).

| Formulierung | Vergleichsbeispiel | | Beispiel | | | | | |
|---|---|---|---|---|---|---|---|---|
| | 2 | 3 | 4 | 5 | 6 | 7 | 8 | 9 |
| Polyol 1 [MT] | 82 | 97 | 93 | 74 | 73,5 | 78 | 89 | 88,5 |
| Polyol 2 [MT] | 15 | - | - | 15 | 15 | 15 | - | - |
| Polyol 3 [MT] | 3 | 3 | 3 | 3 | 3 | 3 | 3 | 3 |
| HB Polyol 1 [MT] | - | - | 4 | 8 | 4 | 4 | 8 | 4 |
| Polyol 4 [MT] | - | - | - | - | 4,5 | - | - | 4,5 |
| Wasser [MT] | 3,0 | 3,0 | 3,0 | 3,0 | 3,0 | 3,0 | 3,0 | 3,0 |
| Stabilisator [MT] | 0,5 | 0,5 | 0,5 | 0,5 | 0,5 | 0,5 | 0,5 | 0,5 |
| Katalysator [MT] | 0,9 | 0,9 | 0,9 | 0,9 | 0,9 | 0,9 | 0,9 | 0,9 |
| Isocyanat 1 [Index] | 90 | 90 | 90 | 90 | 90 | 90 | 90 | 90 |

| Eigenschaften | | | | | | | | |
|---|---|---|---|---|---|---|---|---|
| Rohdichte, Kern [kg/m³] | 50,4 | 47,2 | 46,7 | 47,7 | 48,1 | 46,8 | 45,2 | 47,6 |
| Stauchhärte 40 % [kPa] | 4,5 | 4,1 | 4,5 | 7,4 | 6,4 | 5,9 | 5,3 | 4,8 |
| Rückprallelastizität [%] | 55 | 55 | 62 | 57 | 61 | 59 | 61 | 65 |

## Patentansprüche

1. Polyurethanweichschaumstoff, erhältlich durch Vermischen von
a) Polyisocyanaten mit
b) mindestens einer höhermolekularen Verbindung mit mindestens zwei reaktiven Wasserstoffatomen,
c) hyperverzweigten Polyethern,
d) gegebenenfalls niedermolekulares Kettenverlängerungsmittel und/oder Vernetzungsmittel,
e) Katalysator,
f) Treibmitteln und
g) gegebenenfalls sonstigen Zusatzstoffen,
**dadurch gekennzeichnet, dass** die hyperverzweigten Polyether c) Kondensationsprodukte aus tri- und höherfunktionellen Alkoholen und gegebenenfalls difunktionellen Alkoholen sind, die durch Eintopffahrweise, bei der das Monomer vollständig vorgelegt und die Reaktion in einem rückvermischten Reaktor durchgeführt wird, erhältlich sind.

2. Polyurethanweichschaumstoff nach Anspruch 1, **dadurch gekennzeichnet, dass** die Komponente b) ein polymermodifiziertes Polyol umfasst.

3. Polyurethanweichschaumstoff nach Anspruch 2, **dadurch gekennzeichnet, dass** das polymermodifizierte Polyol ein Pfropf-Polyetherol oder ein Pfropf-Polyesterol mit einem Gehalt an thermoplastischem Polymeren von 5 bis 60 Gew.-%, bezogen auf das Gesamtgewicht des polymermodifizierten Polyols ist.

4. Polyurethanweichschaumstoff nach Anspruch 2 oder 3, **dadurch gekennzeichnet, dass** die Komponente b) zu größer 5 Gew.-%, bezogen auf das Gesamtgewicht der Komponente b), polymermodifiziertes Polyol enthält.

5. Polyurethanweichschaum nach einem der Ansprüche 1 bis 4, **dadurch gekennzeichnet, dass** die Komponenten a), b), c), gegebenenfalls d) und f) in solchen Mengen zur Umsetzung gebracht werden, dass das Äquivalenz-Verhältnis von NCO-Gruppen zur Summe der reaktiven Wasserstoffatome der Komponenten b), c), gegebenenfalls d) und f) 0,7 bis 1,25 : 1 beträgt.

6. Verfahren zur Herstellung von Polyurethanweichschaumstoff, umfassend das Vermischen und Reagierenlassen von
a) Polyisocyanaten mit
b) mindestens einer höhermolekularen Verbindung mit mindestens zwei reaktiven Wasserstoffatomen,
c) hyperverzweigten Polyethern,
d) gegebenenfalls niedermolekularem Ketienverlängerungsmittel und/oder Vernetzungsmittel,
e) Katalysator,
f) Treibmitteln und
g) gegebenenfalls sonstigen Zusatzstoffen
wie in den Ansprüchen 1 bis 5 definiert.

## Claims

1. A flexible polyurethane foam which can be obtained by mixing
a) polyisocyanates with
b) at least one relatively high molecular weight compound having at least two reactive hydrogen atoms,
c) hyperbranched polyethers,
d) optionally a low molecular weight chain extender and/or crosslinker,
e) a catalyst,
f) blowing agents and
g) optionally other additives,
wherein the hyperbranched polyethers c) are condensation products of trifunctional and higher-functional alcohols and optionally bifunctional alcohols which can be obtained by the one-pot method in which the monomer is all initially introduced and the reaction is carried out in a backmixed reactor.

2. The flexible polyurethane foam according to claim 1, wherein the component b) comprises a polymer-modified polyol.

3. The flexible polyurethane foam according to claim 2, wherein the polymer-modified polyol is a graft polyetherol or a graft polyesterol having a content of thermoplastic polymer of from 5 to 60% by weight, based on the total weight of the polymer-modified polyol.

4. The flexible polyurethane foam according to claim 2 or 3, wherein the component b) comprises more than 5% by weight, based on the total weight of the component b), of polymer-modified polyol.

5. The flexible polyurethane foam according to any of claims 1 to 4, wherein the components a), b), c), optionally d) and f) are reacted in such amounts that the equivalence ratio of NCO groups to the sum of the reactive hydrogen atoms of the components b), c), optionally d) and f) is 0.7 - 1.25 : 1.

6. A process for producing flexible polyurethane foam, which comprises mixing and reacting
a) polyisocyanates with
b) at least one relatively high molecular weight compound having at least two reactive hydrogen atoms,
c) hyperbranched polyethers,
d) optionally a low molecular weight chain extender and/or crosslinker,
e) a catalyst,
f) blowing agents and
g) optionally other additives
as defined in any of claims 1 to 5.

## Revendications

1. Mousse souple de polyuréthane, pouvant être obtenue par mélange
a) de polyisocyanates avec
b) au moins un composé de masse moléculaire élevée, comportant au moins deux atomes d'hydrogène réactifs,
c) des polyéthers hyper-ramifiés,
e) éventuellement un prolongateur de chaîne de faible masse moléculaire et/ou un agent de réticulation,
f) un catalyseur,
f) des agents porogènes et
g) éventuellement d'autres additifs,
**caractérisée en ce que** les polyéthers hyper-ramifiés c) sont des produits de condensation d'alcools trifonctionnels et à plus haute fonctionnalité et éventuellement d'alcools difonctionnels, qui peuvent être obtenus par un mode opératoire en un seul récipient, dans lequel on dispose au préalable en totalité le monomère et on effectue la réaction dans un réacteur à rétromélangeage.

2. Mousse souple de polyuréthane selon la revendication 1, **caractérisée en ce que** le composant b) comprend un polyol modifié avec un polymère.

3. Mousse souple de polyuréthane selon la revendication 2, **caractérisée en ce que** le polyol modifié avec un polymère est un polyétherol greffé ou un polyesterol greffé ayant une teneur en polymère thermoplastique de 5 à 60 % en poids, par rapport au poids total du polyol modifié avec un polymère.

4. Mousse souple de polyuréthane selon la revendication 2 ou 3, **caractérisée en ce que** le composant b) contient à raison de plus de 5 % en poids, par rapport au poids total du composant b), un polyol modifié avec un polymère.

5. Mousse souple de polyuréthane selon l'une quelconque des revendications 1 à 4, **caractérisée en ce qu'**on met en réaction les composants a), b), c), éventuellement d) et f) en des quantités telles que le rapport d'équivalents des groupes NCO à la somme des atomes d'hydrogène réactifs des composants b), c), éventuellement d) et f) vaut de 0,7 à 1,25 : 1.

6. Procédé pour la production de mousses souples de polyuréthane, comprenant le fait de mélanger et de laisser réagir
a) des polyisocyanates avec
b) au moins un composé de masse moléculaire élevée, comportant au moins deux atomes d'hydrogène réactifs,
c) des polyéthers hyper-ramifiés,
d) éventuellement un prolongateur de chaîne de faible masse moléculaire et/ou un agent de réticulation,
e) un catalyseur,
f) des agents porogènes et
g) éventuellement d'autres additifs,
tels que définis dans les revendications 1 à 5.
